# EUROPÄISCHE PATENTSCHRIFT

(11) **EP 2 791 630 B1**
(45) Veröffentlichungstag und Bekanntmachung des Hinweises auf die Patenterteilung: **18.05.2016**
(21) Anmeldenummer: 12813303.0
(22) Anmeldetag: 14.12.2012
(51) Int. Cl.: G01F 1/684, G01N 25/58, G01F 1/692

(54) **VERFAHREN ZUR AUSWERTUNG VON MESSSIGNALEN EINES LUFTMASSENMESSERS**
METHOD FOR THE EVALUATION OF MEASURING SIGNALS OF AN AIR MASS FLOW METER
PROCÉDÉ POUR L'ÉVALUATION DES SIGNAUX DE MESURE D'UN DÉBIMÈTRE MASSIQUE D'AIR

(30) Priorität: 15.12.2011 DE 102011088767
(43) Veröffentlichungstag der Anmeldung: 22.10.2014
(73) Patentinhaber: Continental Automotive GmbH, 30165 Hannover (DE)
(72) Erfinder: BÜRGI, Lukas, CH·8049 Zürich (CH); HORNUNG, Mark, CH-3712 Stäfa (CH); KNITTEL, Thorsten, 93080 Pentling (DE); SETESCAK, Stephen, 93080 Pentling (DE)
(86) Internationale Anmeldenummer: PCT/EP2012/075484
(87) Internationale Veröffentlichungsnummer: WO 2013/087811

(56) Entgegenhaltungen:
- EP-A1- 2 290 357
- EP-A1- 2 320 200
- JP-A- H10 104 183

## Beschreibung

Die vorliegende Erfindung betrifft ein Verfahren zur Auswertung von Messsignalen eines Luftmassenmessers,
- wobei der Luftmassenmesser mindestens ein erstes Temperatursensorelement und ein zweites Temperatursensorelement aufweist,
- wobei das erste und das zweite Temperatursensorelement an unterschiedlichen Orten einer mit einem Heizelement beheizten Oberfläche angeordnet sind,
- wobei das erste und das zweite Temperatursensorelement von einer zu messenden Luftmasse angeströmt werden und
- wobei die Differenz der Temperaturmesssignale des ersten und zweiten Temperatursensorelementes gebildet wird und aus dieser Differenz der Temperaturmesssignale die vorbeiströmende Luftmasse ermittelt wird.

Ein derartiger Luftmassenmesser wird beispielsweise in Kraftfahrzeugen zur Ermittlung der von einer Verbrennungskraftmaschine angesaugten Luftmasse verwendet. Auf Basis einer möglichst zuverlässigen Information über eine angesaugte Luftmasse kann eine Verbrennung durch eine Motorsteuerung dahingehend optimiert werden, dass eine genau auf die Luftmasse abgestimmte Kraftstoffmenge den jeweiligen Brennräumen zugeführt wird. Im Ergebnis wird dadurch eine bessere Energieausnutzung bei verringertem Schadstoffausstoß erzielt.

Aus der DE 44 07 209 A1 ist ein Luftmassenmesser bekannt, der in einen Ansaugkanal zur Bestimmung einer Luftmasse eingesteckt wird, wobei ein definierter Anteil der Gesamtströmung den Luftmassensensor durchströmt. Hierzu ist dieser als Einsteckkanal-Luftmassenmesser ausgebildet und umfasst einen in einem Messkanal angeordneten Sensor, eine in einem Gehäuse angeordnete Elektronik für diesen Sensor, sowie einen Auslasskanal jenseits des Sensorelements. Für eine platzsparende Anordnung werden die genannten Kanäle bzw. Luftführungswege U-, S- oder C-förmig ausgebildet, so dass eine insgesamt kompakt als Einsteckelement bauende Vorrichtung gebildet wird.

Aus der EP 2 290 357 A1 ist ein thermischer Luftfeuchtesensor mit einer Anordnung von vier temperaturempfindlichen Widerständen und zwei Heizelementen auf einem gemeinsamen, ebenen Substrat bekannt, wobei die Heizelemente außerhalb der Anordnung temperaturempfindlicher Widerstände angeordnet sind und an zwei gegenüberliegenden Seiten die temperaturempfindlichen Widerstände umgeben. Die Luftfeuchte wird anhand der Messwerte der vier temperaturempfindlichen Widerstände ermittelt.

Aus der JP H10-104183 A ist eine Vorrichtung mit einem Temperatursensor und ein Luftmassenmesser, der ebendiesen Temperatursensor verwendet, bekannt. Dabei wird ein temperaturempfindlicher Widerstand von einem wärmeerzeugenden Widerstand geheizt und die Luftfeuchte über die Veränderungen des Wärmeleitwerts der Luft zwischen den beiden Widerständen ermittelt. Der temperaturempfindliche Widerstand ist stromabwärts des wärmeerzeugenden Widerstands angeordnet, um eine Luftstromkorrektur zu ermöglichen und ein weiterer Temperatursensor ist an einer Position angebracht, wo er keine Wärmebeeinflussung durch den wärmeerzeugenden Widerstand erfährt. Die Luftfeuchte wird anhand der Messwerte des temperaturempfindlichen Widerstands und der Temperaturmesseinrichtung berechnet; die Luftmasse wird aus den Werten von wärmeerzeugendem Widerstrand und Temperatursensor berechnet und korrigiert.

Die EP 2 320 200 A1 offenbart einen thermischen Luftmassenmesser mit einem thermischen Luftfeuchtemesser. Der thermische Luftmassenmesser und der thermische Luftfeuchtemesser sind auf demselben Substrat angeordnet. Ein Steuerkreis, der mit Hilfe des Luftmassenmessers den Massenstrom misst, erzeugt einen Heizstrom, um einen Widerstand zu beheizen, mit dem die Luftfeuchte erfasst werden soll. Die absolute Luftfeuchte wird mit dem Luftfeuchtesensor gemessen und der so ermittelte Wert wird zur Korrektur des Massensensorsignals verwendet.

Ein gemäß der Lehre der WO 03/089884 A1 ausgebildeter Luftmassenmesser, der als Heißfilmanemometer ausgebildet ist, hat sich prinzipiell bewährt.

Die entscheidende Größe, die von einem Luftmassenmesser ermittelt werden soll ist jedoch nicht die Luftmasse selber, sondern die zur Verbrennung in der Brennkraftmaschine zur Verfügung stehende Sauerstoffmenge. Die Zusammensetzung der Luft ist in der Regel bekannt. Die Luft besteht aus Stickstoff, Sauerstoff und Edelgasen, wobei deren Anteile in der Luft bekannte sind. Mit diesen Informationen kann das Messergebnis eines Luftmassenmessers grundsätzlich genutzt werden, um die Sauerstoffmenge zu bestimmen, die zu den Zylindern einer Brennkraftmaschine transportiert wird. Neben den genannten Gasen befindet sich jedoch auch Wasserdampf in der dem Verbrennungsmotor zugeführten Luft. Der Anteil des in der Luft vorhandenen Wasserdampfes wird als Luftfeuchte bezeichnet. Die Luftfeuchte kann erheblich variieren. So kann zum Beispiel an einem kalten klaren Wintertag die Luftfeuchte sehr gering sein, womit der in der gemessenen Luftmenge enthaltene Wasseranteil sehr gering ist. An einem schwülen und warmen Sommertag kann der Wasseranteil in der gemessenen Luftmenge jedoch extrem hoch sein. So kann ein und dieselbe vom Luftmassenmesser erfasste Luftmasse wesentlich mehr oder weniger Sauerstoff enthalten, je nachdem ob die angesaugte Luftmasse mehr oder weniger feucht ist. Um eine optimale Verbrennung zu erreichen, muss daher neben der Kenntnis der angesaugten Luftmasse auch eine Information über die Feuchte der angesaugten Luft vorliegen. Nach dem Stand der Technik werden daher moderne Luftmassenmesser zusätzlich mit einem Feuchtesensorelement ausgerüstet. Das Feuchtesensorelement misst in der Regel die relative Luftfeuchte, die mit Hilfe eines zusätzlich im Luftmassenmesser verbauten Temperatursensorelementes in eine absolute Luftfeuchte umgerechnet werden kann. Diese Art der Luftfeuchtekompensation der Messwerte von Luftmassenmessern ist aufwendig und teuer, da zusätzliche Bauteile im Luftmassenmesser verbaut werden müssen. Diese zusätzlichen Bauteile sind zudem relativ störungsanfällig, da sie zum Beispiel stark auf in der Ansaugluft enthaltenen Verunreinigungen reagieren.

Es ist Aufgabe der vorliegenden Erfindung, ein Verfahren zur Auswertung der Messsignale eines Luftmassenmessers der eingangs genannten Art anzugeben, mit dem auf kostengünstige Art und Weise eine zuverlässige Kompensation des Luftfeuchtefehlers des Luftmassenmessers erreicht wird.

Diese Aufgabe wird durch die Merkmale des unabhängigen Anspruchs gelöst. Vorteilhafte Ausführungsformen sind Gegenstand der abhängigen Ansprüche.

Erfindungsgemäß wird aus den Messsignalen des Luftmassenmessers zusätzlich die in der Luftmasse enthaltene Wassermenge ermittelt, indem an mindestens einem Ort der Oberfläche die Temperatur der Oberfläche ermittelt und ausgewertet wird. Dabei kann die in der Luftmasse enthaltene Wassermenge ermittelt werden, indem mit einem der ohnehin vorhandenen Bauteile an mindestens einem Ort der Oberfläche die Temperatur der Oberfläche ermittelt wird. Vorteilhaft hierbei ist, dass die ohnehin vorhandenen Temperatursensorelemente ausreichen, um einen Aussage über die in der Luftmasse enthaltene Wassermenge, also eine Aussage über die Luftfeuchte, zu erhalten. Zusätzliche Bauteile, neben den ohnehin zur Bestimmung der Luftmasse notwendigen Temperatursensorelementen und dem Heizelement, sind nicht notwendig, um mit dem erfindungsgemäßen Verfahren zur Auswertung der Messsignale eines Luftmassenmessers auch die in der Luftmasse enthaltene Wassermenge zu bestimmen. Insbesondere sind im Luftmassemesser, der mit dem erfindungsgemäßen Verfahren zur Auswertung der Messsignale betreiben wird, keine Luftfeuchtesensorelemente und keine zusätzlichen Temperatursensorelemente notwendig. Wenn der Luftmassenmesser nach dem erfindungsgemäßen Verfahren betrieben wird, erhält man auf kostengünstige Art und Weise eine zuverlässige Kompensation des Luftfeuchtefehlers in den Messsignalen des Luftmassenmessers.

Es ist vorteilhaft, wenn das erste und das zweite Temperatursensorelement sowie die dünne Membran als Mikro-Elektro-Mechanisches Systems ausgebildet sind. Derartige Bauteile liefern hervorragende Messergebnisse. Die dünne Membran ist kaum thermisch leitfähig und somit führt allein die durch die thermische Leitfähigkeit der vorbeiströmende Luftmasse zu unverfälschten Messergenissen.

Bei einer Weiterbildung der Erfindung wird die Summe der von dem ersten Temperatursensorelement und von dem zweiten Temperatursensorelement gemessenen Temperaturen zur Ermittlung der in der Luftmasse enthaltene Wassermenge gebildet und ausgewertet. Durch die Bildung der Summe aus beiden von den Temperatursensorelementen gemessenen Werte, wird die Information über die Luftfeuchte nicht eliminiert, sondern sie bleibt erhalten und kann zur Feuchtekorrektur des Messwertes für die Luftmasse genutzt werden.

Bei einer vorteilhaften Ausgestaltung der Erfindung wird die Differenz der von dem ersten Temperatursensorelement und von dem zweiten Temperatursensorelement gemessenen Temperaturen zur Ermittlung der in der Luftmasse enthaltene Wassermenge gebildet und gegen eine feste Größe ausgewertet und die Differenz der von dem ersten Temperatursensorelement und von dem zweiten Temperatursensorelement gemessenen Temperaturen wird zur Ermittlung der in der Luftmasse enthaltenen Wassermenge gebildet und gegen eine an mindestens einem Ort der Oberfläche gemessene Temperatur ausgewertet. Durch diese Ausgestaltung werden alle Störeffekte, wie zum Beispiel Luftpulsationen im Luftmassenstrom entfernt, die Informationen über die Luftfeuchte und den Massenstrom selber bleiben jedoch erhalten. Die feste Größe kann zum Beispiel durch eine konstante Spannung gebildet werden, die durch die Auswerteschaltung zur Verfügung gestellt werden kann.

Weitere Merkmale und Vorteile der Erfindung werden nachfolgend unter Beschreibung eines Ausführungsbeispiels mit Bezugnahme auf die Abbildungen der Zeichnung angegeben. Über die verschiedenen Abbildungen hinweg werden nachfolgend gleiche Begriffe und Bezugszeichen für gleiche Bauelemente verwendet werden. Dabei zeigt:
- Figur 1:: einen Luftmassenmesser,
- Figur 2:: ein Luftmassensensorelement,
- Figur 3:: ein als Mikro-Elektro-Mechanisches System (MEMS) ausgebildetes Luftmassensensorelement, das in einem Hilfsrohr des Luftmassenmessers angeordnet ist,
- Figur 4:: eine Situation, bei der ein Luftmassenstrom durch die Einlassöffnung in das Hilfsrohr des Luftmassenmessers einströmt,
- Figur 5:: das Luftmassensensorelement in einem Luftmassenmesser, der als Einsteckfinger in einem Ansaugrohr integriert ist,
- Figur 6:: den Zusammenhang zwischen der spezifischen Luft feuchte und der relativen Luftfeuchte.
- Figur 7:: ein Diagramm, bei dem in der Abszisse die absolute Luftfeucht in g Wasser pro m³ Luft aufgetragen ist und auf der Ordinate die thermische Leitfähigkeit dieser Luft dargestellt ist.

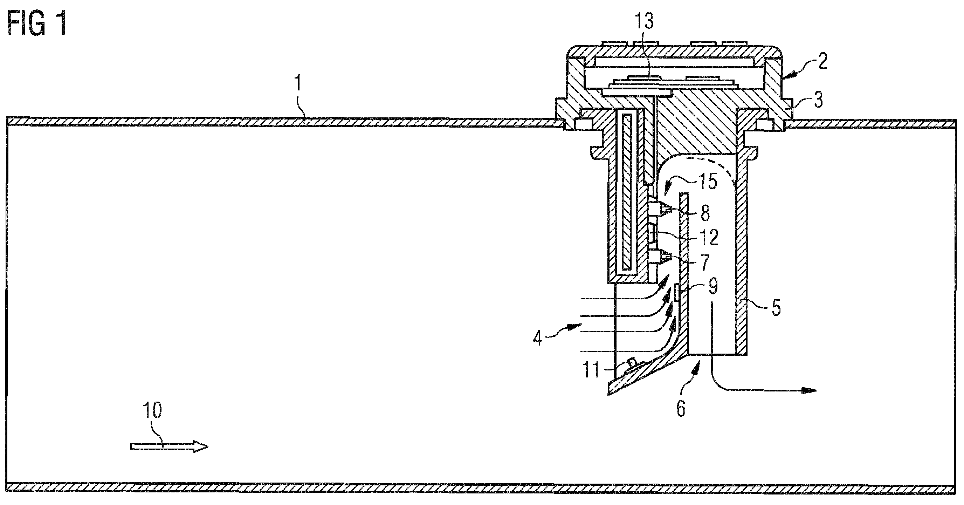

Figur 1 zeigt einen Luftmassenmesser 2. Der Luftmassenmesser 2 ist in diesem Beispiel als Einsteckfinger ausgebildet, der in das Ansaugrohr 1 eingesteckt wird und mit dem Ansaugrohr fest verbunden wird. Das Ansaugrohr 1 führt einen Luftmassenstrom 10 hin zu den Zylindern einer Brennkraftmaschine. Zur effizienten Verbrennung des Treibstoffes in den Zylindern einer Brennkraftmaschine ist es notwendig, eine genaue Information über die zur Verfügung stehende Luftmasse zu erhalten. Anhand der zur Verfügung stehenden Luftmasse kann auf den verfügbaren Sauerstoff geschlossen werden, der zur Verbrennung des in die Zylinder eingespritzten Kraftstoffes notwendig ist. Je nach äußeren Witterungsbedingungen kann der Luftmassenstrom 10 jedoch neben den in der Luft vorhandenen Gasen Sauerstoff, Stickstoff und Edelgase auch eine mehr oder weniger große Menge an Wasser enthalten. Dieser Wasseranteil in dem Luftmassenstrom wird auch als Luftfeuchte bezeichnet. Umso mehr Wasser in dem Luftmassenstrom enthalten ist, umso weniger Sauerstoff befindet sich in der Luftmasse. Die Luftfeuchte verfälscht daher letztlich die Aussage über den Sauerstoffgehalt, der zur Verfügung steht, um in den Zylindern der Brennkraftmaschine den Kraftstoff zu verbrennen. Daher ist es notwendig, die in der Luftmasse enthaltene Wassermenge, also die Luftfeuchte, zusätzlich zu ermitteln und das Signal des Luftmassenmessers entsprechend zu kompensieren. Dazu zeigt Figur 1 ein Luftfeuchtesensorelement 9, das in der Einlassöffnung 4 des Luftmassenmessers 2 platziert ist. Darüber hinaus zeigt der Luftmassenmesser 2 in Figur 1 ein erstes Temperatursensorelement 7 und ein zweites Temperatursensorelement 8. Das erste Temperatursensorelement 7 und das zweite Temperatursensorelement 8 sind an unterschiedlichen Orten angeordnet. Zwischen dem ersten Temperatursensorelement 7 und dem zweiten Temperatursensorelement 8 ist ein Heizelement 12 ausgebildet. Der Luftmassenstrom 10, der durch die Einlassöffnung 4 in das Gehäuse 3 des Luftmassenmessers 2 eintritt, überströmt zunächst das erste Temperatursensorelement 7 und dann das Heizelement 12, wonach der Luftmassenstrom 10 das zweite Temperatursensorelement 8 erreicht und entlang des Hilfsrohres 5 zur Auslassöffnung 6 des Luftmassenmessers 2 geleitet wird. Der Luftmassenstrom 10 erreicht das erste Temperatursensorelement 7 mit einer bestimmten Temperatur. Diese Temperatur wird vom ersten Temperatursensorelement 7 erfasst. Danach überstreicht der Luftmassenstrom 10 das Heizelement 12, wobei der Luftmassenstrom je nach vorbeiströmender Masse mehr oder weniger aufgeheizt wird. Wenn der aufgeheizte Luftmassenstrom nun das zweite Temperatursensorelement 8 erreicht, wird die nun vorliegende Temperatur des Luftmassenstroms 10 mit dem zweiten Temperatursensorelement 8 bestimmt. Aus der Differenz der vom ersten Temperatursensorelement 7 und vom zweiten Temperatursensorelement 8 gemessenen Temperaturen kann die vorbeigeströmte Luftmasse bestimmt werden. Dazu kann der Luftmassenmesser 2 selber eine Auswerteelektronik 13 enthalten, die die Messsignale des ersten Temperatursensorelementes 7 und des zweiten Temperatursensorelementes 8 auswertet. Die so gewonnene Information über den Luftmassenstrom wird an eine hier nicht dargestellte Motorsteuerung weitergeleitet. Nachteilig bei dem hier gezeigten Luftmassensensor 2 ist, dass im Hilfsrohr 5 zumindest ein Luftfeuchtesensorelement 9 zusätzlich angeordnet sein muss, um die in der Luftmasse enthaltene Wassermenge zu bestimmen. Um eine Aussage über die absolute Luftfeuchte zu erhalten, muss zusätzlich ein Hilfstemperatursensorelement 11 im Hilfsrohr 5 des Luftmassenmessers 2 angeordnet sein. Das Hilfstemperatursensorelement 11 und das Luftfeuchtesensorelement 9 können entfallen, wenn die Messsignale des Luftmassenmessers 2 erfindungsgemäß ausgewertet und verarbeitet werden.

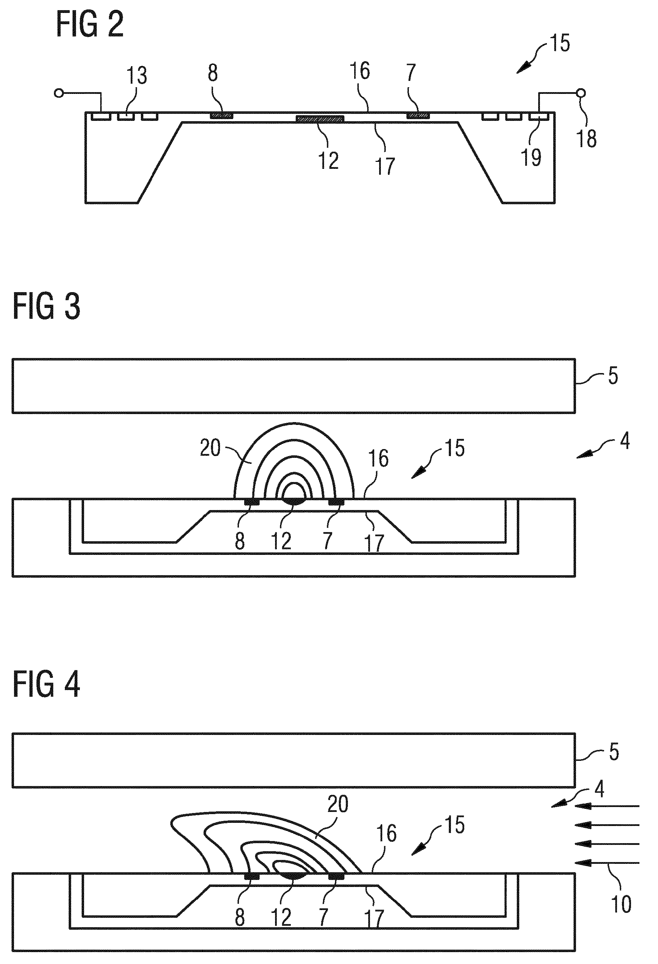

Figur 2 zeigt ein Luftmassensensorelement 15. Das Luftmassensensorelement 15 ist in als Mikro-Elektro-Mechanisches System (MEMS) auf einem einzigen Silizium-Chip ausgebildet. Das Luftmassensensorelement 15 arbeitet nach dem Differenztemperaturverfahren, womit die Masse der vorbeiströmenden Luftmenge bestimmt wird. Hierzu sind auf einer dünnen Membran 17 ein erstes Temperatursensorelement 7 und ein zweites Temperatursensorelement 8 ausgebildet. Das erste und das zweite Temperatursensorelement 7, 8 befinden sich an unterschiedlichen Orten auf der Oberfläche 16 der Membran 17. Zwischen dem ersten Temperatursensorelement 7 und dem zweiten Temperatursensorelement 8 ist ein Heizelement 12 angeordnet. Auf dem als Mikro-ElektroMechanisches System aufgebauten Luftmassensensorelement 15 ist zudem eine Auswerteelektronik 13 integriert, die die Messsignale der Temperatursensorelemente 7, 8 sofort auswerten und in ein Signal, das proportional zum Luftmassenstrom ist, umwandeln kann. Die Auswerteelektronik kann jedoch ebenso gut in einem nachgeschalteten elektronischen Gerät integriert sein. Die Informationen über den Luftmassenstrom werden dann über Anschlusspads 19 und Anschlussdrähte 18 an eine hier nicht dargestellte nachfolgende Motorelektrosteuerung weitergeleitet.

In Figur 3 wird ein als Mikro-Elektro-Mechanisches System (MEMS) ausgebildetes Luftmassensensorelement 15 gezeigt, das auf einem einzigen Substrat ausgebildet ist, wobei das Substrat in einem Hilfsrohr 5 des Luftmassenmessers 2 angeordnet ist. In Figur 3 strömt durch die Einlassöffnung 4 kein Luftmassenstrom, was zum Beispiel bei ausgestellter Brennkraftmaschine der Fall sein wird. Wenn dennoch das Heizelement 12 im Luftmassensensorelement 15 mit elektrischer Energie versorgt wird, entsteht um das Heizelement 12 die hier dargestellte symmetrische Temperaturverteilung 20. Damit misst sowohl das erste Temperatursensorelement 7 und das zweite Temperatursensorelement 8 die gleiche Temperatur und nach der Differenzbildung der Temperaturmesssignale der Temperatursensorelemente 7, 8 wird von der Auswerteelektronik 13 erkannt, dass kein Luftmassenstrom 10 im Hilfsrohr 5 des Luftmassenmessers 2 vorliegt.

Figur 4 zeigt eine Situation, bei der ein Luftmassenstrom 10 durch die Einlassöffnung 4 in das Hilfsrohr 5 des Luftmassenmessers 2 einströmt. Die Temperaturverteilung 20 um das Heizelement 12 wird nun deutlich sichtbar in Richtung des zweiten Temperatursensorelementes 8 verschoben. Damit misst das zweite Temperatursensorelement 8 eine deutlich höhere Temperatur als das erste Temperatursensorelement 7. Durch die Feststellung der Differenztemperatur der beiden Temperatursensorelemente 7, 8 in der Auswerteelektronik 13 lässt sich nun der Luftmassenstrom bestimmen. Die Summe der Temperaturen reagiert ebenfalls auf den Massenstrom. Darüber hinaus reagiert jedoch die Summe der Temperaturen auch auf die thermischen Eigenschaften der Luftmasse, wie zum Beispiel die Wärmekapazität und/oder die thermische Leitfähigkeit des vorbeiströmenden Luftmassenstromes. Erhöht sich zum Beispiel bei gleichem Luftmassenstrom die thermische Leitfähigkeit der Luftmasse, so kühlt das System ab und die Summe der Temperaturen wird deutlich geringer. Die Differenztemperatur des ersten Luftmassensensorelementes 7 und des zweiten Luftmassensensorelementes 8 bleibt jedoch in erster Näherung unverändert. Somit kann durch das Summensignal des ersten Temperatursensorelementes 7 und des zweiten Temperatursensorelementes 8 eine Änderung der thermischen Eigenschaften, wie zum Beispiel der Wärmekapazität, oder der thermischen Leitfähigkeit der Luftmasse gemessen werden. Verrechnet man nun das Differenztemperatursignal mit dem Summentemperatursignal, kann auf die veränderte thermische Leitfähigkeit und/oder die veränderte Wärmekapazität der vorbeiströmenden Luftmasse geschlossen werden. Die vorbeiströmende Luftmasse besteht nun aus den Gasen Sauerstoff, Stickstoff, Edelgase und Wasserdampf. Die Zusammensetzung dieses Gasgemisches in der vorbeiströmenden Luftmasse verändert sich durch eine Veränderung des Anteils an Wasserdampf im Gasgemisch, wobei keine zusätzlichen Komponenten zum Gasgemisch hinzukommen. Da die thermische Leitfähigkeit und die Wärmekapazität der Luftmasse in erster Linie von der enthaltenen gasförmigen Wassermenge abhängen, kann durch die Bestimmung der thermischen Leitfähigkeit und/oder der Wärmekapazität auf eine Änderung der Mischung geschlossen werden und insbesondere die Menge des enthaltenen Wasserdampfes bestimmt werden. Da die Luft im Ansaugbereich von Brennkraftmaschinen immer eine sehr ähnliche Zusammensetzung aufweist und sich im Wesentlichen nur der Anteil von Feuchte bzw. Wasserdampf ändert, eignet sich das erfindungsgemäße Verfahren sehr gut, um eine feuchte Kompensation des Messsignales des Luftmassenmessers vorzunehmen. Aus den vorhandenen Messsignalen des Luftmassenmessers wird zusätzlich die in der Luftmasse enthaltene Wassermenge ermittelt, in dem an mindestens einem Ort der Oberfläche die Temperatur der Oberfläche ermittelt und ausgewertet wird. Dazu werden die ohnehin in einem Luftmassensensorelement vorhandenen Bauteile genutzt, mit denen an mindestens einem Ort der Oberfläche die Temperatur der Oberfläche bestimmt wird. Auch das Heizelement 12 kann genutzt werden, um die Temperatur der Oberfläche 16 zu bestimmen. Dazu wird das Heizelement 12 auf eine bestimmte Temperatur geregelt, wobei die Aufnahme der elektrischen Leistung durch das Heizelement 12 ausgewertet wird. Bei einer bevorzugten Ausgestaltung der Erfindung wird die Summe der von dem ersten Temperatursensorelement 7 und von dem zweiten Temperatursensorelement 8 gemessenen Temperatur zur Ermittlung der in der Luftmasse 10 enthaltenen Wassermenge gebildet und ausgewertet. Der erfindungsgemäß ausgewertete Luftmassenmesser misst auf Grund seines Messprinzips direkt die benötige physikalische Größe, nämlich die spezifische Luftfeuchte im Luftmassenstrom 10. Daher ist keine Umrechnung von relativer Luftfeuchte in spezifische Luftfeuchte notwendig. Die spezifische Luftfeuchte ist letztlich die für die perfekte Verbrennung des Treibstoffes notwendig Größe, die zu bestimmen ist. Gerade bei Temperaturen über 30 °C wird die in der Luftmasse enthaltene Wassermenge für die Verbrennung wesentlich. Ab dieser Temperatur hat ein nach dem erfindungsgemäßen Verfahren ausgewerteter Luftmassenmesser eine hervorragende Auflösung. Im Gegensatz zu den nach dem Stand der Technik bekannten Luftmassensensoren mit einem Luftfeuchtesensor besitzt der nach dem erfinderischen Verfahren ausgewertete Luftmassensensor keine sensitive Oberfläche, die durch Schadgase oder andere Medien vergiftet oder dauerhaft geschädigt werden kann. Daher sind nach dem Verfahren zur Auswertung von Messsignalen eines Luftmassenmessers ausgewertete Luftmassenmesser deutlich langzeitstabiler als feuchtekompensierte Luftmassenmesser nach dem Stand der Technik. Die Luftmassenmesser nach dem Stand der Technik mit dem zusätzlichen Feuchtesensorelement müssen gegen Umwelteinflüsse geschützt werden, indem sogenannte Schutzmembranen verwendet werden. Dies resultiert in einer deutlich schlechteren Ansprechzeit der Luftmassenmesser, die nach dem Stand der Technik arbeiten. Feuchtesensorelemente benötigen selbst bei direktem Kontakt mit der Luftmasse eine gewisse Zeit zum Feuchteaustausch mit der Umgebung. Dies führt zu einer verzögerten Feuchtekompensation bei Luftmassenmessern, die nach dem Stand der Technik arbeiten. Da bei dem Verfahren zur Auswertung von Messsignalen eines Luftmassenmessers nach der Erfindung kein Austausch von Feuchte aus der Luftmasse mit dem Sensor notwendig ist, reagiert der Luftmassenmesser nach der Erfindung deutlich schneller als herkömmliche feuchtekompensierte Luftmassensensoren.

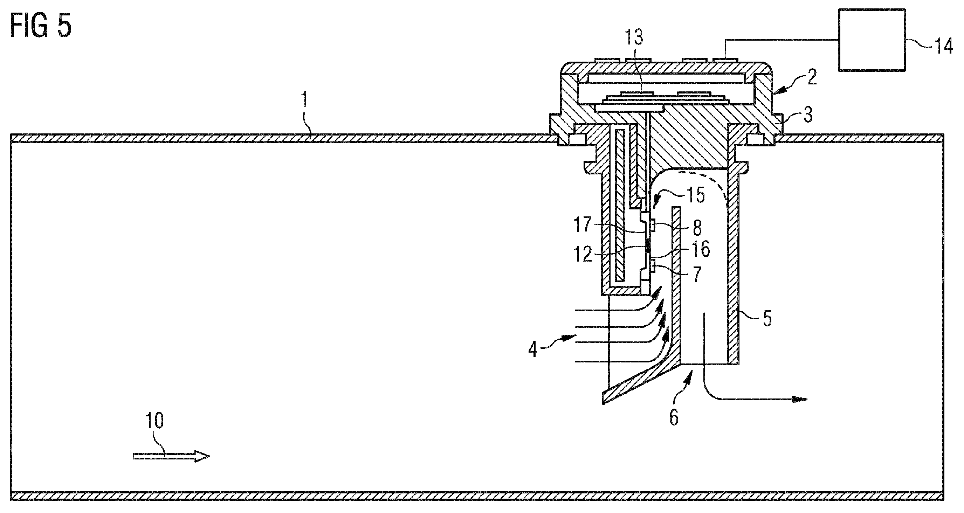

Figur 5 zeigt das Luftmassensensorelement 15, das als Mikro-Elektro-Mechanisches System (MEMS) ausgebildet ist, in einem Luftmassenmesser 2, der als Einsteckfinger in einem Ansaugrohr 1 integriert ist. Der Luftmassenstrom 10 erreicht auch hier die Einlassöffnung 4 und tritt in das Hilfsrohr 5 ein. Auf der Oberfläche 16 der Membran 17 sind das erste Temperatursensorelement 7 und das zweite Temperatursensorelement 8 zu erkennen. Zwischen dem ersten Temperatursensorelement 7 und dem zweiten Temperatursensorelement 8 ist das Heizelement 12 angeordnet. Der Luftmassenstrom 10 erreicht zunächst das erste Temperatursensorelement 7, überströmt dann das Heizelement 12, um danach das zweite Temperatursensorelement 8 zu erreichen. Zu erkennen ist, dass im hier gezeigten Luftmassenmesser 2 kein Feuchtesensorelement 9 und auch kein Hilfstemperatursensorelement 11 angeordnet sind. Dennoch kann der hier gezeigte Luftmassenmesser 2 seine Messsignale nach dem erfinderischen Verfahren auswerten und die in der Luftmasse enthaltene Wassermenge ermitteln. Eine Korrektur des Messsignals des Luftmassenmessers um die in der vorbeiströmenden Luftmasse enthaltene Wassermenge ist damit möglich. Durch die Ermittlung der Temperatur der Oberfläche an mindestens einem Ort der Oberfläche erhält man bei der Auswertung des Messsignals direkt eine Aussage über die spezifische Luftfeuchte, die letztlich die entscheidende Größe zur Feuchtekorrektur des Signals des Luftmassenmessers ist.

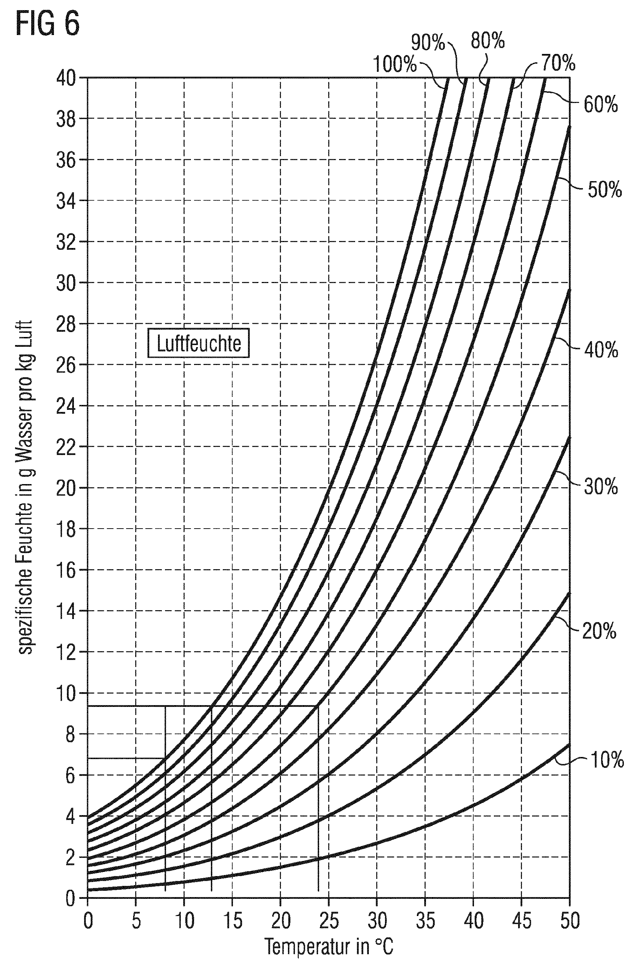

Figur 6 zeigt den Zusammenhang zwischen der spezifischen Luftfeuchte und der relativen Luftfeuchte. Dies ist in einem Luftfeuchtediagramm dargestellt, bei dem auf der Abszisse die Temperatur von 0 bis 50 Grad erfasst wird und die Ordinate die spezifische Feuchte in g Wasser pro kg Luft von 0 bis 40 darstellt. In diesem Diagramm ist eine Kurvenschar zu erkennen, wobei jeweils eine Kurve den Zusammenhang zwischen der Temperatur und der spezifischen Luftfeuchte für eine bestimmte relative Luftfeuchte darstellt. Von unten nach oben sind die Kurven für die Luftfeuchte von 10 %, 20 %, 30 % bis hin zu einer Luftfeuchte von 100 % dargestellt. Man erkennt beispielsweise, dass Luft bei 24 °C und 50 % relativer Luftfeuchte etwa 9,3 g Wasser pro kg Luft enthält. Diese entspricht einem Taupunkt von ungefähr 12,8 °C. Kühlt man diese Luft auf 8 Grad ab, kann sie nur maximal 6,8 g Wasser aufnehmen, die restlichen 2,5 g Wasser kondensieren aus. Bei 25 °C ist die maximale spezifische Luftfeuchtigkeit ungefähr bei 2 %. Bei einer nominalen Motorabstimmung auf 50 % relative Luftfeuchte ist ein maximaler Fehler von 1 % der gemessenen, trockenen Luftmasse möglich.

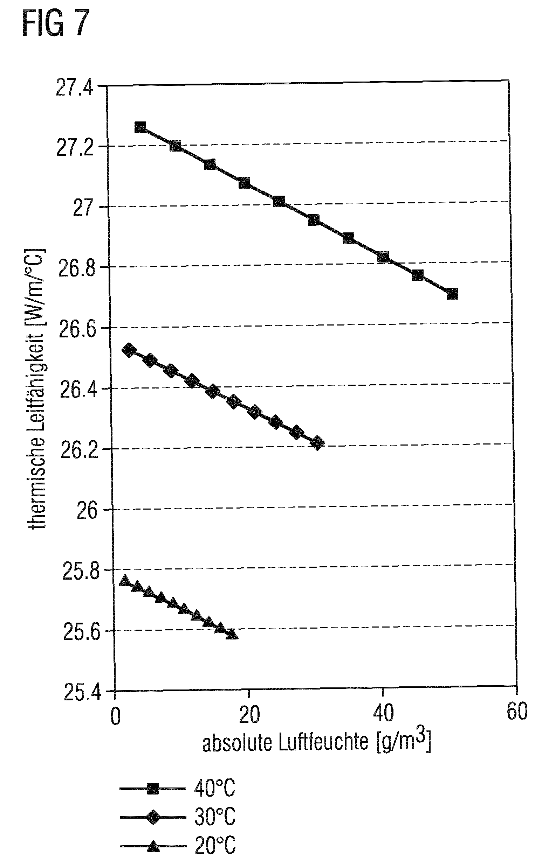

Figur 7 zeigt ein Diagramm, bei dem in der Abszisse die absolute Luftfeucht in g Wasser pro m³ Luft aufgetragen ist und auf der Ordinate die thermische Leitfähigkeit dieser Luft dargestellt ist. Es sind drei Kurven zu erkennen und zwar für Lufttemperaturen von 20, 30 und 40 °C. Hier ist deutlich zu erkennen, dass die thermische Leitfähigkeit der Luft mit steigender absoluter Luftfeuchte nahezu linear abnimmt. Aus diesem Zusammenhang kann über die Ermittlung der Temperatur der an mindestens einem Ort der Oberfläche des Luftmassensensorelementes auf die thermische Leitfähigkeit der Luft geschlossen und damit die Luftfeuchte, insbesondere die spezifische Luftfeuchte, ermittelt werden.

## Patentansprüche

1. Verfahren zur Auswertung von Messsignalen eines Luftmassenmessers (2) mit einem Luftmassensensorelement (9),
- wobei das Luftmassensensorelement (9) als Bauteile ein erstes Temperatursensorelement(7), ein zweites Temperatursensorelement (8) und ein Heizelement (12) aufweist,
- wobei das erste und das zweite Temperatursensorelement (7, 8) an unterschiedlichen Orten auf einer mit dem Heizelement (12) beheizten Oberfläche (16) des Luftmassensensorelementes (9) angeordnet sind,
- wobei das erste und das zweite Temperatursensorelement (7, 8) von einer zu messenden Luftmasse angeströmt werden und
- wobei die Differenz der Temperaturmesssignale des ersten und zweiten Temperatursensorelementes (7, 8) gebildet wird und aus dieser Differenz der Temperaturmesssignale die vorbeiströmende Luftmasse ermittelt wird,
**dadurch gekennzeichnet, dass** aus den Messsignalen des Luftmassenmessers (2) zusätzlich die in der Luftmasse enthaltene Wassermenge ermittelt wird, indem an mindestens einem Ort der Oberfläche (16) die Temperatur der Oberfläche (16) ermittelt und ausgewertet wird, wobei die Summe der von dem ersten Temperatursensorelement (7) und von dem zweiten Temperatursensorelement (8) gemessenen Temperaturen zur Ermittlung der in der Luftmasse enthaltene Wassermenge gebildet und ausgewertet wird, wobei das Summentemperatursignal mit dem Differenztemperatursignal verrechnet wird.

2. Verfahren zur Auswertung von Messsignalen eines Luftmassenmessers (2) nach Anspruch 1, **dadurch gekennzeichnet, dass** die in der Luftmasse enthaltene Wassermenge ermittelt wird, indem mit einem der ohnehin vorhandenen Bauteile an mindestens einem Ort der Oberfläche (16) die Temperatur der Oberfläche (16) ermittelt wird.

3. Verfahren zur Auswertung von Messsignalen eines Luftmassenmessers (2) nach Anspruch 1 oder 2, **dadurch gekennzeichnet , dass** das Heizelement (12) ein elektrisch betriebenes Heizelement ist.

4. Verfahren zur Auswertung von Messsignalen eines Luftmassenmessers (12) nach einem der Ansprüche 1 bis 3, **dadurch gekennzeichnet, dass** die Oberfläche (16), auf der die Temperatursensorelemente (7, 8) angeordnet sind, als dünne Membran (17) ausgebildet ist.

5. Verfahren zur Auswertung von Messsignalen eines Luftmassenmessers (2) nach Anspruch 4, **dadurch gekennzeichnet, dass** das erste und das zweite Temperatursensorelement (7, 8) sowie die dünne Membran (17) als Mikro-Elektro-Mechanisches Systems ausgebildet sind.

6. Verfahren zur Auswertung von Messsignalen eines Luftmassenmessers (2) nach einem der vorgenannten Ansprüche, **dadurch gekennzeichnet, dass** das erste Temperatursensorelement (7) und das zweite Temperatursensorelement (8) nacheinander in Luftmassenstrom (10) angeordnet sind.

7. Verfahren zur Auswertung von Messsignalen eines Luftmassenmessers (2) nach einem der vorgenannten Ansprüche, **dadurch gekennzeichnet, dass** das Heizelement (12) die Temperatur der Oberfläche (16) ermittelt.

8. Verfahren zur Auswertung von Messsignalen eines Luftmassenmessers (2) nach Anspruch 7, **dadurch gekennzeichnet, dass** das Heizelement (12) auf eine vorbestimmte Temperatur geregelt wird, wobei die Aufnahme der elektrischen Leistung durch das Heizelement (12) ausgewertet wird.

9. Verfahren zur Auswertung von Messsignalen eines Luftmassenmessers (2) nach Anspruch 8, **dadurch gekennzeichnet, dass** die vorbestimmt Temperatur konstant ist.

## Claims

1. Method for the evaluation of measuring signals of an air mass flow meter (2) with an air mass flow sensor element (9),
- wherein the air mass flow sensor element (9) has, as components, a first temperature sensor element (7), a second temperature sensor element (8) and a heating element (12),
- wherein the first and the second temperature sensor elements (7, 8) are arranged at different locations on a surface (16) of the air mass flow sensor element (9) which is heated with the heating element (12),
- wherein an air mass to be measured flows against the first and second temperature sensor elements (7, 8), and
- wherein the difference between the temperature measuring signals of the first and second temperature sensor elements (7, 8) is formed, and the air mass which flows past is determined from this difference between the temperature measuring signals,
**characterized in that** in addition the quantity of water contained in the air mass is determined on the basis of the measuring signals of the air mass flow meter (2) **in that** the temperature at the surface (16) is determined at at least one location on the surface (16) and evaluated, wherein the sum of the temperatures measured by the first temperature sensor element (7) and by the second temperature sensor element (8) is formed and evaluated in order to determine the quantity of water contained in the air mass, wherein the composite temperature signal is compared with the difference temperature signal.

2. Method for the evaluation of measuring signals of an air mass flow meter (2) according to Claim 1, **characterized in that** the quantity of water which is contained in the air mass is determined by determining the temperature at the surface (16) with one of the components which is present in any case at at least one location on the surface (16).

3. Method for the evaluation of measuring signals of an air mass flow meter (2) according to Claim 1 or 2, **characterized in that** the heating element (12) is an electrically operated heating element.

4. Method for the evaluation of measuring signals of an air mass flow meter (2) according to one of Claims 1 to 3, **characterized in that** the surface (16) on which the temperature sensor elements (7, 8) are arranged is embodied as a thin diaphragm (17).

5. Method for the evaluation of measuring signals of an air mass flow meter (2) according to Claim 4, **characterized in that** the first and second temperature sensor elements (7, 8) and the thin diaphragm (17) are embodied as a micro-electromechanical system.

6. Method for the evaluation of measuring signals of an air mass flow meter (2) according to one of the abovementioned claims, **characterized in that** the first temperature sensor element (7) and the second temperature sensor element (8) are arranged one after the other in the air mass flow (10).

7. Method for the evaluation of measuring signals of an air mass flow meter (2) according to one of the abovementioned claims, **characterized in that** the heating element (12) determines the temperature of the surface (16).

8. Method for the evaluation of measuring signals of an air mass flow meter (2) according to Claim 7, **characterized in that** the heating element (12) is adjusted to a predetermined temperature, wherein the absorption of the electrical power by the heating element (12) is evaluated.

9. Method for the evaluation of measuring signals of an air mass flow meter (2) according to Claim 8, **characterized in that** the predetermined temperature is constant.

## Revendications

1. Procédé d'interprétation de signaux de mesure d'un appareil de mesure de masse d'air (2) comprenant un élément détecteur de masse d'air (9),
- l'élément détecteur de masse d'air (9) possédant comme composants un premier élément capteur de température (7), un deuxième élément capteur de température (8) et un élément chauffant (12),
- les premier et deuxième éléments capteurs de température (7, 8) étant disposés à des endroits différents sur une surface (16) chauffée avec l'élément chauffant (12) de l'élément détecteur de masse d'air (9),
- la masse d'air à mesurer étant soufflée sur les premier et deuxième éléments capteurs de température (7, 8) et
- la différence des signaux de mesure de la température des premier et deuxième éléments capteurs de température (7, 8) étant formée et la masse d'air qui s'écoule étant déterminée à partir de cette différence des signaux de mesure de la température,
**caractérisé en ce que** la quantité d'eau contenue dans la masse d'air est en plus déterminée à partir des signaux de mesure de l'appareil de mesure de masse d'air (2), **en ce que** la température de la surface (16) est déterminée et interprétée en au moins un endroit de la surface (16), la somme des températures mesurées par le premier élément capteur de température (7) et par le deuxième élément capteur de température (8) étant formée et interprétée en vue de déterminer la quantité d'air contenue dans la masse d'air, le signal de température total étant compensé avec le signal de température différentielle.

2. Procédé d'interprétation de signaux de mesure d'un appareil de mesure de masse d'air (2) selon la revendication 1, **caractérisé en ce que** la quantité d'eau contenue dans la masse d'air est déterminée en déterminant la température de la surface (16) en au moins un endroit de la surface (16) avec un composant qui est de toute façon présent.

3. Procédé d'interprétation de signaux de mesure d'un appareil de mesure de masse d'air (2) selon la revendication 1 ou 2, **caractérisé en ce que** l'élément chauffant (12) est un élément chauffant à fonctionnement électrique.

4. Procédé d'interprétation de signaux de mesure d'un appareil de mesure de masse d'air (2) selon l'une des revendications 1 à 3, **caractérisé en ce que** la surface (16) sur laquelle sont disposés les éléments capteurs de température (7, 8) est réalisée sous la forme d'une membrane mince (17).

5. Procédé d'interprétation de signaux de mesure d'un appareil de mesure de masse d'air (2) selon la revendication 4, **caractérisé en ce que** les premier et deuxième éléments capteurs de température (7, 8) ainsi que la membrane mince (17) sont réalisés sous la forme d'un système microélectromécanique.

6. Procédé d'interprétation de signaux de mesure d'un appareil de mesure de masse d'air (2) selon l'une des revendications précédentes, **caractérisé en ce que** le premier élément capteur de température (7) et le deuxième élément capteur de température (8) sont disposés l'un après l'autre dans le courant de masse d'air (10).

7. Procédé d'interprétation de signaux de mesure d'un appareil de mesure de masse d'air (2) selon l'une des revendications précédentes, **caractérisé en ce que** l'élément chauffant (12) détermine la température de la surface (16).

8. Procédé d'interprétation de signaux de mesure d'un appareil de mesure de masse d'air (2) selon la revendication 7, **caractérisé en ce que** l'élément chauffant (12) est régulé à une température prédéfinie, la consommation de puissance électrique par l'élément chauffant (12) étant interprétée.

9. Procédé d'interprétation de signaux de mesure d'un appareil de mesure de masse d'air (2) selon la revendication 8, **caractérisé en ce que** la température prédéfinie est constante.
